# FASCICULE DE BREVET EUROPEEN

(11) **EP 3 947 916 B1**
(45) Date de publication et mention de la délivrance du brevet: **15.02.2023**
(21) Numéro de dépôt: 20720076.7
(22) Date de dépôt: 24.04.2020
(51) Int. Cl.: F01D 5/18, B22C 9/24, B22C 9/10

(54) **AUBE DE TURBINE D'UNE TURBOMACHINE, TURBINE, TURBOMACHINE ET NOYAU CÉRAMIQUE ASSOCIÉ POUR LA FABRICATION D'UNE AUBE DE TURBINE DE TURBOMACHINE**
TURBINENSCHAUFEL EINER TURBOMASCHINE, TURBINE, TURBOMASCHINE UND ZUGEHÖRIGER KERAMISCHER KERN ZUR HERSTELLUNG EINER TURBINENSCHAUFEL EINER TURBOMASCHINE
TURBINE VANE OF A TURBOMACHINE, TURBINE, TURBOMACHINE AND ASSOCIATED CERAMIC CORE FOR MANUFACTURING A TURBINE VANE OF A TURBOMACHINE

(30) Priorité: 09.05.2019 FR 1904817
(43) Date de publication de la demande: 09.02.2022
(73) Titulaire: SAFRAN, 75015 Paris (FR); SAFRAN AIRCRAFT ENGINES, 75015 Paris (FR)
(72) Inventeur: OSTINO, Léandre, 77550 MOISSY-CRAMAYEL (FR); AUZILLON, Pierre, Guillaume, 77550 MOISSY-CRAMAYEL (FR); SLUSARZ, Michel, 77550 MOISSY-CRAMAYEL (FR); ENEAU, Patrice, 77550 MOISSY-CRAMAYEL (FR); DE ROCQUIGNY, Thomas, Olivier, Michel, Pierre, 77550 MOISSY-CRAMAYEL (FR); CARIOU, Romain, Pierre, 77550 MOISSY-CRAMAYEL (FR); TANG, Ba-Phuc, 77550 MOISSY-CRAMAYEL (FR); ROLLINGER, Adrien, Bernard, Vincent, 77550 MOISSY-CRAMAYEL (FR); SIMON, Vianney, 77550 MOISSY-CRAMAYEL (FR)
(74) Mandataire: Brevalex
(86) Numéro de dépôt international: PCT/EP2020/061502
(87) Numéro de publication internationale: WO 2020/224995

(56) Documents cités:
- FR-A1- 3 056 631
- FR-A1- 3 057 906
- FR-A1- 3 067 388
- FR-A1- 3 072 415

## Description

### DOMAINE TECHNIQUE

L'invention concerne une aube de moteur d'aéronef de type turbomachine, tel que par exemple un turboréacteur ou un turbopropulseur, et elle s'applique notamment à une aube de turbine de type haute pression. Plus précisément, l'invention concerne une aube de turbine d'une turbomachine, une turbine de turbomachine, une turbomachine, ainsi qu'un noyau céramique pour la fabrication d'une aube de turbine d'une turbomachine.

### ÉTAT DE LA TECHNIQUE ANTÉRIEURE

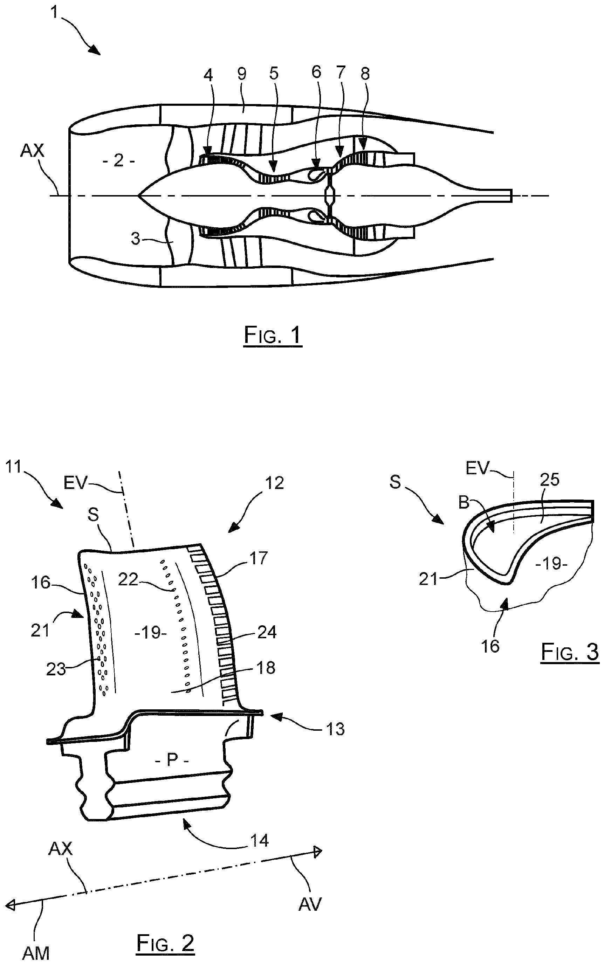

Dans un tel moteur de type turboréacteur, repéré par 1 dans la figure 1, l'air est admis dans une manche d'entrée 2 pour traverser une soufflante comportant une série de pales rotatives 3 avant de se scinder en un flux primaire central et un flux secondaire entourant le flux primaire.

Le flux primaire est comprimé par des compresseurs basse pression 4 et haute pression 5 avant d'atteindre une chambre de combustion 6, après quoi il se détend en traversant une turbine haute pression 7 et une turbine basse pression 8, avant d'être évacué en générant une poussée auxiliaire. Le flux secondaire est quant à lui propulsé directement par la soufflante pour générer une poussée principale.

Chaque turbine 7, 8 comporte des séries d'aubes orientées radialement et régulièrement espacées autour d'un axe de rotation AX, un carter externe 9 entourant l'ensemble du moteur.

Le refroidissement des aubes de turbines est assuré en faisant circuler dans chaque aube de l'air prélevé en amont de la chambre de combustion et admis en pied d'aube, cet air étant évacué par des perçages et/ou des fentes traversant les parois de ces aubes.

D'une manière générale, l'efficacité du refroidissement, et en particulier la diminution du débit nécessaire au refroidissement des aubes de turbines haute pression permet de réduire la consommation en carburant d'un turboréacteur, et d'augmenter la durée de vie des aubes. A ce titre, différents agencements d'aubes ont été proposés, comme notamment dans le document de brevet FR3021697.

Les documents FR3057906 et FR3072415 divulguent chacun une aube de turbine d'une turbomachine telle qu'un turboréacteur, destinée à être montée autour d'un axe de rotation sur un disque de rotor tournant autour de l'axe de rotation, comprenant un pied pour son montage dans une alvéole du disque, et une pale creuse s'étendant à partir du pied selon une direction radiale d'envergure en se terminant par un sommet formant une baignoire, la pale comprenant une paroi d'intrados et une paroi d'extrados, ainsi qu'un bord d'attaque, un bord de fuite et une paroi de sommet délimitant un fond de la baignoire, et par lesquels la paroi d'intrados est reliée à la paroi d'extrados, cette pale comprenant également :
- un circuit médian de type en trombone, incluant un premier conduit collectant de l'air au niveau du pied et qui est raccordé par un premier coude à un deuxième conduit qui est raccordé par un deuxième coude à un troisième conduit, ces premier, deuxième et troisième conduits étant principalement radiaux, les deuxième et troisième conduits étant situés entre le premier conduit et le bord de fuite ;
- une cavité sous baignoire située du côté de la paroi d'extrados et de la paroi de sommet et qui s'étend le long du sommet jusqu'au bord de fuite.

D'un côté, FR3057906 divulgue de plus un conduit central principalement radial situé entre le deuxième conduit et le troisième conduit, ce conduit central collectant de l'air au niveau du pied et s'étendant entre au moins deux des trois conduits du circuit médian pour alimenter directement la cavité sous baignoire.

D'un autre côté, FR3072415 divulgue de plus un conduit central principalement radial situé entre la paroi d'extrados et le premier conduit du circuit médian, ce conduit central collectant de l'air au niveau du pied et s'étendant entre au moins deux des trois conduits du circuit médian pour alimenter directement la cavité sous baignoire.

Néanmoins, il apparaît que le refroidissement des aubes de turbine haute pression nécessite un constant effort d'amélioration du fait notamment de l'évolution continuelle des conditions de fonctionnement, des procédés de fabrication et des besoins en performances.

Dans ce contexte, le but de l'invention est d'apporter une nouvelle conception d'aube ayant un circuit de refroidissement amélioré.

### EXPOSÉ DE L'INVENTION

A cet effet, l'invention a pour objet une aube de turbine d'une turbomachine telle qu'un turboréacteur, destinée à être montée autour d'un axe de rotation sur un disque de rotor tournant autour d'un axe de rotation, comprenant un pied pour son montage dans une alvéole du disque, et une pale creuse s'étendant à partir du pied selon une direction radiale d'envergure en se terminant par un sommet formant une baignoire, la pale comprenant une paroi d'intrados et une paroi d'extrados, ainsi qu'un bord d'attaque, un bord de fuite et une paroi de sommet délimitant un fond de la baignoire, et par lesquels la paroi d'intrados est reliée à la paroi d'extrados, cette pale comprenant également :
- un circuit médian de type en trombone, incluant un premier conduit collectant de l'air au niveau du pied et qui est raccordé par un premier coude à un deuxième conduit qui est raccordé par un deuxième coude à un troisième conduit, ces premier deuxième et troisième conduits étant principalement radiaux, les deuxième et troisième conduits radiaux étant situés entre le premier conduit et le bord de fuite ;
- une cavité sous baignoire située du côté de la paroi d'extrados et de la paroi de sommet et qui s'étend le long du sommet jusqu'au bord de fuite ;
- un conduit central principalement radial situé entre la paroi d'extrados et le deuxième conduit du circuit médian, ce conduit central collectant de l'air au niveau du pied et s'étendant entre au moins deux des trois conduits du circuit médian pour alimenter directement la cavité sous baignoire.

Grâce à l'alimentation de la cavité sous baignoire par un conduit central situé entre les conduits du circuit de type serpentin, l'air acheminé vers la cavité sous baignoire se réchauffe peu, ce qui permet de refroidir efficacement la paroi d'intrados proche du sommet et du bord de fuite.

L'invention a également pour objet une aube ainsi définie, dans laquelle une extrémité du troisième conduit et au moins une partie du premier coude sont situés entre la cavité sous baignoire et la paroi d'intrados.

L'invention a également pour objet une aube ainsi définie, dans laquelle au moins une partie du premier coude est située entre la cavité sous baignoire et la paroi d'intrados, et dans laquelle le troisième conduit présente une extrémité qui se termine au niveau de la paroi de sommet.

L'invention a également pour objet une aube ainsi définie, dans laquelle le conduit central et la cavité sous baignoire forment un conduit en L situé du côté de la paroi d'extrados.

L'invention a également pour objet une aube ainsi définie, dans laquelle le conduit central s'étend entre au moins deux conduits du circuit médian qui s'étendent l'un et l'autre sur la majorité de leurs longueurs respectives depuis la paroi d'extrados jusqu'à la paroi d'intrados.

L'invention a également pour objet une aube ainsi définie, dans laquelle le premier conduit et le troisième conduit s'étendent l'un et l'autre sur la majorité de leurs longueurs depuis la paroi d'intrados jusqu'à la paroi d'extrados, et dans laquelle le conduit central s'étend d'une part entre le premier conduit et le troisième conduit, et d'autre part entre le deuxième conduit et la paroi d'extrados.

L'invention a également pour objet une aube ainsi définie, dans laquelle la paroi d'intrados comporte des trous de refroidissement qui la traversent et débouchent dans le troisième conduit pour former un film de refroidissement de la paroi d'intrados en amont du bord de fuite.

L'invention a également pour objet une aube ainsi définie, dans laquelle la paroi d'intrados est dépourvue de trous débouchant dans le premier conduit et/ou dans le deuxième conduit.

L'invention a également pour objet une aube ainsi définie, comportant des fentes de refroidissement traversant la paroi d'intrados le long du bord de fuite pour la refroidir, et dans laquelle au moins une de ces fentes est située du côté du sommet et est alimentée en air de refroidissement par la cavité sous baignoire.

L'invention a également pour objet une aube ainsi définie, comprenant un circuit aval additionnel comportant un conduit aval principalement radial, ce conduit aval collectant de l'air au niveau du pied pour alimenter plusieurs fentes de refroidissement du bord de fuite.

L'invention a également pour objet une aube ainsi définie, dans laquelle le conduit aval alimente les fentes par l'intermédiaire d'une rampe aval avec laquelle il communique par des canaux principalement axiaux.

L'invention a également pour objet une aube ainsi définie, comprenant au moins un conduit amont principalement radial dédié au refroidissement du bord d'attaque, ce conduit amont radial collectant de l'air de refroidissement au niveau du pied pour refroidir le bord d'attaque en évacuant cet air par des trous traversant la paroi de la pale au niveau du bord d'attaque.

L'invention a également pour objet une turbine de turbomachine comprenant une aube ainsi définie.

L'invention a également pour objet une turbine ainsi définie.

L'invention a également pour objet un noyau en céramique pour la fabrication d'une aube de turbine d'une turbomachine telle qu'un turboréacteur, destinée à être montée autour d'un axe de rotation sur un disque de rotor tournant autour d'un axe de rotation, comprenant un pied pour son montage dans une alvéole du disque, et une pale creuse s'étendant à partir du pied selon une direction radiale d'envergure en se terminant par un sommet formant une baignoire, la pale comprenant une paroi d'intrados et une paroi d'extrados, ainsi qu'un bord d'attaque, un bord de fuite et une paroi de sommet délimitant un fond de la baignoire, et par lesquels la paroi d'intrados est reliée à la paroi d'extrados, ce noyau comprenant :
- un élément de noyau pour former un circuit médian de type en trombone, incluant un premier conduit collectant de l'air au niveau du pied et qui est raccordé par un premier coude à un deuxième conduit qui est raccordé par un deuxième coude à un troisième conduit, ces premier deuxième et troisième conduits étant principalement radiaux, les deuxième et troisième conduits étant situés entre le premier conduit et le bord de fuite ;
- un autre élément de noyau pour former une cavité sous baignoire située du côté de la paroi d'extrados et de la paroi de sommet et qui s'étend depuis une région centrale du sommet jusqu'au bord de fuite, ainsi qu'un conduit central principalement radial situé entre la paroi d'extrados et le conduit médian, ce conduit central collectant de l'air au niveau du pied et s'étendant entre au moins deux des trois conduits du circuit médian pour alimenter directement la cavité sous baignoire.

### BRÈVE DESCRIPTION DES DESSINS

[Fig. 1] est une vue en coupe d'un turboréacteur connu ;
[Fig. 2] est une vue externe en perspective d'une aube selon l'invention ;
[Fig. 3] est une vue en perspective du sommet de l'aube selon l'invention ;
[Fig. 4] est une vue du circuit de refroidissement amont de l'aube selon l'invention représenté seul et vu depuis le côté intrados ;
[Fig. 5] est une vue du circuit de refroidissement médian de l'aube selon l'invention représenté seul et vu depuis le côté intrados ;
[Fig. 6] est une vue du circuit de refroidissement central de l'aube selon l'invention représenté seul et vu depuis le côté intrados ;
[Fig. 7] est une vue du circuit de refroidissement aval de l'aube selon l'invention représenté seul et vu depuis le côté intrados ;
[Fig. 8] est une vue d'ensemble des quatre circuits de refroidissement tels qu'agencés dans l'aube selon l'invention et vus depuis le côté intrados ;
[Fig. 9] est une vue d'ensemble montrant le circuit médian et le circuit central de refroidissement tels qu'agencés dans l'aube selon l'invention et vus depuis le côté intrados ;
[Fig. 10] montre la cavité sous baignoire ainsi que les circuits médian central et aval vus selon la direction d'envergure à distance de l'axe longitudinal.

### DESCRIPTION DÉTAILLÉE DE L'INVENTION

L'idée à la base de l'invention est de concevoir une aube dans laquelle le débit d'air nécessaire au refroidissement de sa partie médiane est réduit pour favoriser un meilleur refroidissement de ses parties critiques, comme en particulier la paroi d'intrados dans la région du sommet proche du bord de fuite.

### Agencement général de l'aube

L'aube selon l'invention, repérée par 11 sur la figure 2, comprend un pied P par lequel elle est fixée à une alvéole d'un disque de rotor appelé disque de turbine, et une pale 12 portée par ce pied P, avec une plateforme 13 raccordant le pied P à la pale 12. Cette aube 11 qui est creuse comporte quatre circuits internes dans lesquels circule de l'air de refroidissement admis par quatre embouchures situées à une face radialement interne 14 du pied P.

La pale 12 a une forme vrillée autour d'un axe dit d'envergure EV sensiblement perpendiculaire à un axe AX de rotation du rotor portant l'aube, cet axe de rotation étant un axe longitudinal du moteur. Elle comprend un bord d'attaque 16 sensiblement parallèle à la direction d'envergure EV et situé à l'amont AM ou avant de l'aube, par rapport à la direction générale de circulation des gaz dans la turbomachine. Elle comporte un bord de fuite 17 sensiblement parallèle au bord d'attaque 16 et espacé de celui-ci le long de l'axe AX pour être à l'aval AV ou arrière de l'aube. Elle comprend encore un sommet S sensiblement parallèle à la base 18 et espacé de celle-ci selon la direction d'envergure EV.

Les deux parois principales de cette aube sont sa paroi d'intrados 19, visible dans la figure 2, et sa paroi d'extrados 21, qui sont espacées l'une de l'autre tout en étant réunies au niveau du bord d'attaque 16, au niveau du bord de fuite 17, et dans la région du sommet S. La paroi d'intrados comporte des trous de refroidissement 22 qui la traversent et sont alimentés par un circuit de refroidissement interne pour former un film à la face externe de l'intrados 19 afin de la protéger thermiquement dans la région située en amont du bord de fuite 17.

Le bord d'attaque 16 est bombé et comporte des trous de refroidissement 23 traversant sa paroi, et le bord de fuite 17 qui est effilé comporte une série de fentes de refroidissement. Ces fentes 24 sont de faibles longueurs et s'étendent parallèlement à la direction d'envergure EV, en étant espacées et dans le prolongement les unes des autres selon la direction d'envergure EV, c'est-à-dire la direction radiale, et elles sont situées à faible distance du bord de fuite proprement dit. Chaque fente 24 traverse la paroi d'intrados pour souffler de l'air sur la face externe de cette paroi d'intrados vers le bord de fuite qui est pourvu de nervures externes canalisant cet air parallèlement à l'axe AX.

Comme visible sur la figure 3, le sommet S comporte une paroi de sommet 25 orientée perpendiculairement à la direction d'envergure EV, qui raccorde les parois d'intrados et d'extrados. Cette paroi de sommet 25 est située en retrait vers l'axe AX par rapport aux bords libres des parois d'intrados et d'extrados, pour former avec ceux-ci une portion creuse, dite en baignoire et repérée par B, qui est ouverte en direction opposée à l'axe AX.

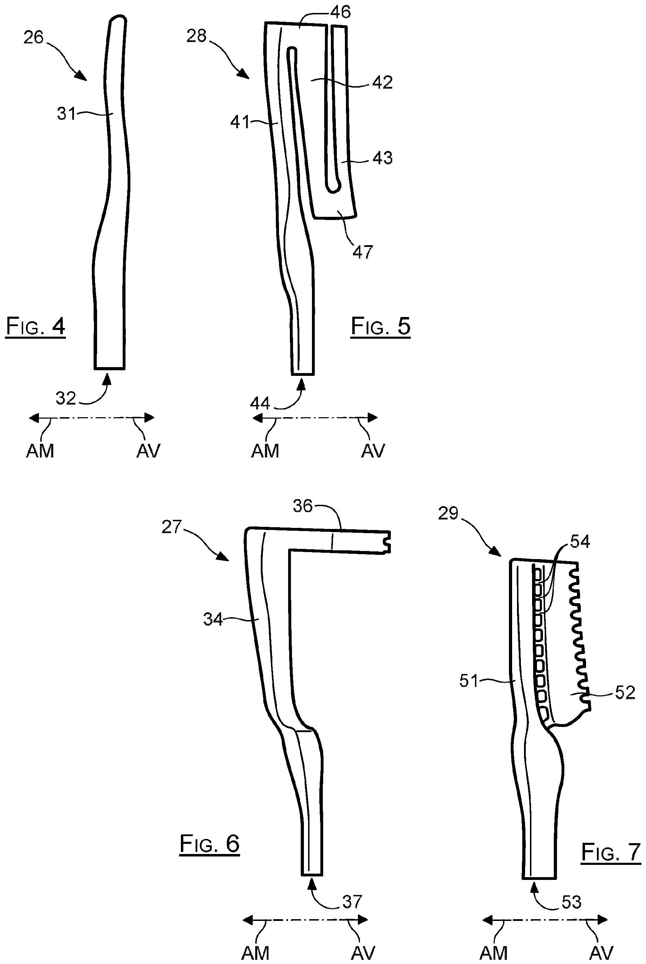

Cette aube est une pièce monobloc issue de fonderie d'un matériau métallique, qui est obtenue en utilisant un ensemble de noyaux pour délimiter ses conduits internes de refroidissement, ces noyaux étant retirés après coulée et refroidissement par exemple avec un processus d'attaque chimique. Les figures 4 à 10 montrent des régions internes de l'aube qui y sont représentées par les formes des noyaux permettant de fabriquer cette aube. Les formes de ces figures 4 à 10 sont ainsi en relief, mais elles constituent aussi des représentations des formes creuses de l'aube.

L'aube 11 selon l'invention comporte quatre circuits internes de refroidissement : un circuit amont 26 ; un circuit central 27 ; un circuit médian 28 s'étendant de part et d'autre du circuit central ; et un circuit aval 29.

La fabrication de cette aube par fonderie est assurée en utilisant des noyaux en céramique comprenant quatre éléments de noyaux pouvant être rigidement solidarisés entre eux, chaque élément de noyau délimitant l'un des circuits 26, 27, 28 et 29.

### Circuit amont

Comme visible sur la figure 4, le circuit amont 26 comporte un conduit amont 31 radial, c'est-à-dire s'étendant parallèlement à la direction d'envergure EV. Ce conduit s'étend depuis son embouchure 32 située au niveau du pied P de la pale, jusqu'à une région du sommet S située sous la baignoire : il est terminé par la paroi de sommet délimitant le fond de la baignoire de l'aube.

L'air collecté dans l'embouchure 32 chemine dans le conduit 31 pour alimenter les trous de refroidissement 23 permettant d'assurer un refroidissement efficace de la portion de paroi constituant le bord d'attaque 16 de l'aube.

### Circuit central

Le circuit central 27 qui apparaît sur la figure 6 comprend un conduit central 34 principalement radial prolongé par une cavité sous baignoire 36 axiale, c'est-à-dire s'étendant le long de l'axe AX, ce conduit central 34 étant dédié à l'alimentation en air de cette cavité sous baignoire 36 et au refroidissement de la région du sommet S proche du bord de fuite. Le conduit central 34 s'étend depuis le pied P de l'aube où il comporte une embouchure 37 par laquelle il collecte l'air de refroidissement, et il est terminé par la paroi de sommet 25.

La cavité sous baignoire 36 s'étend longitudinalement, depuis une région centrale du sommet S, jusqu'au bord de fuite 17, et l'extrémité amont de cette cavité 36 est raccordée à l'extrémité radiale du conduit central 34 pour être alimentée en air par celui-ci. La longueur de la cavité sous baignoire 36 est comprise entre 10 et 50 % de la corde axiale du profil aérodynamique de l'aube, c'est-à-dire la longueur de la pale selon la direction axiale. Une faible longueur permet d'assurer l'alimentation de la ou des fentes 24 du bord de fuite avec un air frais qui s'est peu échauffé au contact des parois d'intrados et d'extrados. Une grande longueur permet d'assurer un refroidissement renforcé de la paroi d'intrados en sommet d'aube.

Cette cavité sous baignoire 36 est délimitée latéralement d'une part par la paroi d'extrados 21 sur l'essentiel de la longueur de cette cavité, et d'autre part par la paroi d'intrados 19 au voisinage du bord de fuite 17 et en partie avant par une paroi courbe interne de l'aube séparant le circuit médian du circuit central. Autrement dit, sur l'essentiel de sa longueur, la cavité sous baignoire 36 est au contact de l'extrados, et elle est au contact de l'extrados et de l'intrados dans la région aval de la pale, c'est-à-dire à proximité du bord de fuite de cette pale. Cette cavité sous baignoire 36 est délimitée selon l'axe d'envergure EV, par la paroi de sommet 25, et par un fond parallèle à cette paroi de sommet et espacé de celle-ci.

Le conduit central 34 est quant à lui délimité latéralement par la paroi d'intrados 19, et par la paroi séparant le circuit central 27 du circuit médian 28. L'air circulant dans ce conduit central 34 est ainsi en contact avec la paroi d'intrados 19, mais pas avec la paroi d'extrados 21.

La cavité sous baignoire 36 s'étend ainsi principalement en sommet d'aube de la partie centrale jusqu'à la région proche du bord de fuite 17 afin d'assurer un refroidissement maximal par échange thermique dans cette région qui est soumise à une température de gaz élevée et est critique vis-à-vis de l'oxydation et de l'écaillage. Cette cavité 36 permet notamment d'alimenter en air frais une ou plusieurs des fentes 24 de refroidissement du bord de fuite côté intrados qui sont les plus proches du sommet S, tout en ventilant efficacement par sa face interne la paroi d'intrados 19 proche du sommet S et du bord de fuite 17.

### Circuit médian de type serpentin

Le circuit médian 28 qui est visible sur la figure 5 comporte trois conduits 41, 42 et 43 radiaux communiquant les uns avec les autres selon un agencement en serpentin, encore appelé trombone, pour maximiser le trajet de l'air afin de faire travailler au maximum l'air issu de ce conduit. Le premier et le troisième conduit 41 et 43 sont situés respectivement en amont et en aval du conduit central 34 du circuit 27, alors que le deuxième conduit 42 est au même niveau que le conduit central 34 le long de l'axe AX en étant interposé entre ce conduit central 34 et la paroi d'intrados.

Les conduits 41, 42, 43 constituant le circuit médian 28 sont ainsi situés autour du conduit central 34, pour limiter l'échauffement de l'air acheminé par ce conduit central 34 vers la cavité sous baignoire 36 de manière à refroidir efficacement la région du sommet d'aube proche du bord de fuite.

### Premier conduit :

Le premier conduit 41 est ainsi situé longitudinalement entre le conduit amont 31 du circuit amont 26 et le conduit central 34 du circuit central 27 en les longeant tous les deux. Ce premier conduit 41, collecte de l'air au niveau du pied P par son embouchure 44 et il est terminé au niveau de la paroi de sommet en étant raccordé au deuxième conduit 42 par un premier coude 46. Ce premier conduit 41 s'étend latéralement depuis la paroi d'extrados 21 jusqu'à la paroi d'intrados 19, de sorte que l'air qui y chemine est en contact direct avec les parois d'intrados et d'extrados.

Ce premier conduit 41 est dépourvu de perçages traversant la paroi d'intrados 19 et de perçages traversant la paroi d'extrados 21 : il ne génère pas de film de refroidissement en face externe de l'aube. Ceci permet de favoriser un débit important dans ce premier conduit. Comme l'air circule dans ce premier conduit depuis le pied P vers le sommet S, il est plaqué contre la paroi d'intrados par effet Coriolis, mais l'étendue de la surface de contact avec la paroi d'intrados est réduite : cette combinaison permettant d'augmenter l'échange thermique avec la paroi d'intrados pour la refroidir de manière maximale.

### Deuxième conduit :

Le deuxième conduit 42 du circuit médian 28 longe le premier conduit 41 et le conduit central 34 du circuit central 27, en s'étendant latéralement entre la paroi d'intrados 19 et la paroi interne qui le sépare du conduit central 34, ce conduit central s'étendant quant à lui latéralement depuis cette paroi interne jusqu'à la paroi d'extrados 21. Ce deuxième conduit 42 présente ainsi une épaisseur selon la direction latérale qui est de l'ordre de la moitié de celle du premier conduit 41, et l'air qui y circule est en contact avec la paroi d'intrados 19 mais n'est pas en contact avec la paroi d'extrados 21.

Eventuellement, ce deuxième conduit 42 est lui aussi dépourvu de trous traversant la paroi d'intrados 19 : dans ce cas, il ne contribue pas à un refroidissement par film externe, afin de favoriser un débit important également dans ce deuxième conduit 42. Comme l'air circule dans ce deuxième conduit 42 depuis le sommet S vers le pied P, il est plaqué par effet Coriolis contre la paroi interne qui est soumise à une température de gaz plus faible que la paroi d'intrados, de sorte que l'échauffement de l'air dans ce deuxième conduit 42 est relativement faible.

### Paroi interne :

La paroi interne de l'aube, non matérialisée sur les figures, s'étend entre le deuxième conduit 42 du circuit médian 28, et le conduit central 34 du circuit central 27, est une paroi centrale incurvée s'étendant d'une part depuis la base 18 jusqu'à la région du sommet S, et d'autre part de l'intrados 19 à l'extrados 21. En fonctionnement, cette paroi interne présente une température relativement faible du fait qu'elle n'est pas en contact avec le fluide dans lequel baigne l'aube. Par ailleurs, cette paroi interne reprend une part importante des efforts centrifuges subis par l'aube en service, ce qui limite l'endommagement de cette aube par fluage.

### Troisième conduit :

Le deuxième conduit 42 est raccordé dans la région de la base 18 de l'aube au troisième conduit 43, par un deuxième coude 47 situé latéralement entre la paroi d'intrados et la paroi interne.

Le troisième conduit 43 est espacé du deuxième conduit 42 le long de l'axe AX, et il le longe en s'étendant depuis la base 18 jusqu'à la région sous baignoire, parallèlement au conduit central 34 qu'il longe également. Sur l'essentiel de sa longueur, ce troisième conduit 43 s'étend latéralement de la paroi d'intrados 19 à la paroi d'extrados 21. Mais au niveau de son extrémité terminale, la section de ce troisième conduit 43 est réduite pour qu'il s'étende latéralement de la cavité sous baignoire 36 à la paroi d'intrados 19, et il est terminé par la paroi de sommet 25.

L'air circulant dans ce troisième conduit 43 est ainsi en contact direct avec les parois d'intrados et d'extrados sur l'essentiel de sa longueur, mais il est en contact uniquement avec l'intrados dans la portion d'extrémité de ce conduit du fait que cette extrémité s'étend depuis la cavité sous baignoire 36 jusqu'à la paroi d'intrados 19.

L'embouchure 44 constitue l'unique voie d'alimentation en air de tout le circuit médian, cet air traversant successivement les conduits 41, 42 et 43. Lorsqu'il parcourt le premier et le deuxième conduit 41 et 42, cet air conserve un débit important grâce à l'absence de perçages dans le premier conduit et éventuellement dans le deuxième, et il y est faiblement réchauffé. Lorsque l'air atteint le troisième conduit 43 il présente ainsi un débit élevé et une température relativement faible permettant de refroidir efficacement cette partie. Le refroidissement de cette partie est notamment assuré au moyen des trous de refroidissement 22 traversant la paroi d'intrados 19 pour former un film d'air protégeant thermiquement la face externe de la paroi d'intrados 19 en amont du bord de fuite 17.

D'une manière générale, grâce à la combinaison du circuit central 27 et du circuit médian 28 selon l'invention, le débit d'air pour refroidir la zone en milieu de pale est inférieur au débit nécessaire avec un circuit de refroidissement classique.

### Agencement du circuit médian par rapport à la cavité sous baignoire

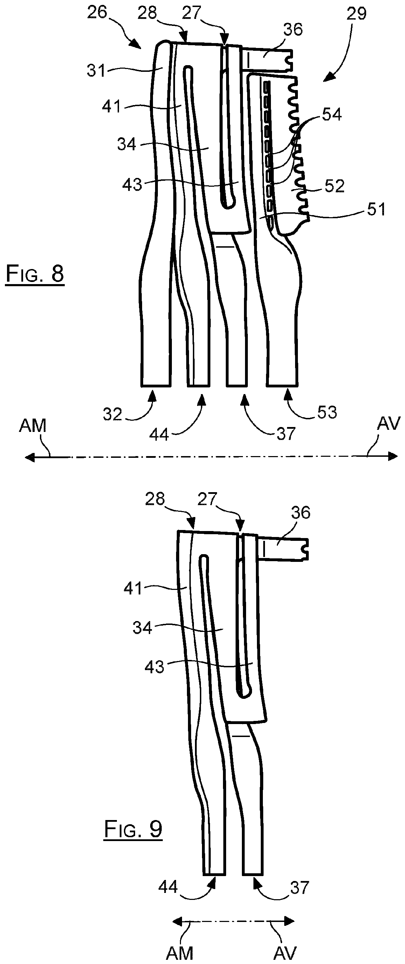

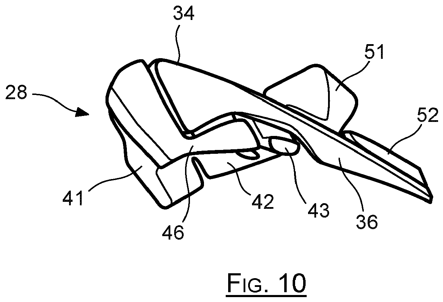

Comme visible plus clairement sur les figures 9 et 10, la cavité sous baignoire 36 s'étend du côté extrados, par rapport au sommet du troisième conduit 43 et au premier coude 46 qui longent l'un et l'autre l'intrados. Cette cavité sous baignoire 36 assure le refroidissement de la paroi d'intrados 19 en sommet d'aube au voisinage du bord de fuite.

La cavité sous baignoire est isolée de la paroi d'intrados qui est chaude, sur l'essentiel de sa longueur grâce au premier conduit 41 et au premier coude 46 tous deux situés entre la cavité sous baignoire 36 et l'intrados 19 qui est la paroi la plus chaude. Ainsi, l'air arrivant en extrémité aval de la cavité sous baignoire est suffisamment frais pour refroidir efficacement l'intrados au voisinage du bord de fuite.

Dans ce cadre, et comme visible plus clairement sur la figure 10, la section du troisième conduit 43 est rétrécie au niveau de son sommet, de façon à libérer de l'espace pour la cavité sous baignoire 36.

En variante, l'extrémité terminale du troisième conduit 43 est située sous la cavité sous baignoire 36 de manière à étendre vers l'amont la longueur de cavité sous baignoire en contact avec la paroi d'intrados, pour améliorer encore le refroidissement du sommet d'aube : le faible débit d'air relativement réchauffé arrivant au sommet du troisième conduit 43 n'est pas utilisé pour refroidir le sommet d'aube côté intrados proche du bord de fuite. Cette variante qui peut être conditionnée par les contraintes de fabrication des éléments de noyaux et par les contraintes de coulée ne correspond pas à la représentation de l'extrémité du troisième conduit tel qu'elle apparaît sur les figures 5 et 8 à 10.

### Circuit aval

Comme visible sur la figure 7, le circuit aval 29 comporte un conduit aval 51 alimentant une rampe aval 52 qui longe ce conduit aval 51 et qui alimente à son tour les fentes de refroidissement 24.

Plus particulièrement, la rampe aval 52 est à distance du conduit 51 le long de l'axe AX, et elle est reliée à celui-ci par une série de canaux 54 principalement axiaux, c'est-à-dire s'étendant le long de l'axe AX. Ces canaux 54 sont régulièrement espacés radialement les uns par rapport aux autres le long de la direction d'envergure EV, et assurent une alimentation en air homogène de la rampe aval 52 sur toute sa hauteur, chaque canal ayant une section de passage calibrée, c'est-à-dire prédéterminée.

Le conduit 51 et la rampe 52 s'étendent selon la direction d'envergure EV depuis une embouchure 53 située au niveau du pied P et par laquelle est collecté l'air de refroidissement, jusqu'à la cavité sous baignoire 36.

D'une manière générale, les différents circuits peuvent comporter des perturbateurs de flux disposés dans leurs conduits pour générer des turbulences afin d'accroître les échanges thermiques entre l'air et l'aube à leur niveau.

### Avantages

D'une manière générale, l'aube selon l'invention permet de diminuer le débit d'air nécessaire à son refroidissement, en réduisant significativement le débit nécessaire au refroidissement de la portion médiane de l'aube s'étendant sensiblement à mi-distance entre son bord d'attaque et son bord de fuite, et en préservant un air frais pour refroidir l'intrados proche du sommet et du bord de fuite.

Grâce à l'alimentation de la cavité sous baignoire par un conduit central situé entre les conduits du circuit de type serpentin, l'air acheminé vers la cavité sous baignoire se réchauffe peu, ce qui permet de refroidir efficacement la paroi d'intrados proche du sommet et du bord de fuite.

Le fait que le premier et le deuxième conduit du circuit de type serpentin soient dépourvus de trous vers l'extrados et vers l'intrados permet de préserver un débit important dans ce circuit de type serpentin pour refroidir efficacement les faces externes de la partie aval de l'aube grâce au troisième conduit de ce circuit de type serpentin.

Avec cet agencement, le circuit amont comporte un unique conduit dédié au refroidissement du bord d'attaque qui est de ce fait lui aussi refroidi de façon maximale.

## Revendications

1. Aube de turbine d'une turbomachine telle qu'un turboréacteur, destinée à être montée autour d'un axe de rotation (AX) sur un disque de rotor tournant autour de l'axe de rotation (AX), comprenant un pied (P) pour son montage dans une alvéole du disque, et une pale (12) creuse s'étendant à partir du pied (P) selon une direction radiale d'envergure (EV) en se terminant par un sommet (S) formant une baignoire (B), la pale (12) comprenant une paroi d'intrados (19) et une paroi d'extrados (21), ainsi qu'un bord d'attaque (16), un bord de fuite (17) et une paroi de sommet (25) délimitant un fond de la baignoire (B), et par lesquels la paroi d'intrados (19) est reliée à la paroi d'extrados (21), **caractérisé en ce que** la pale (12) comprend également :
- un circuit médian (28) de type en trombone, incluant un premier conduit (41) collectant de l'air au niveau du pied (P) et qui est raccordé par un premier coude (46) à un deuxième conduit (42) qui est raccordé par un deuxième coude (47) à un troisième conduit (43), ces premier, deuxième et troisième conduits (41, 42, 43) étant principalement radiaux, les deuxième et troisième conduits (42, 43) étant situés entre le premier conduit (41) et le bord de fuite (17) ;
- une cavité sous baignoire (36) située du côté de la paroi d'extrados (21) et de la paroi de sommet (25) et qui s'étend le long du sommet (S) jusqu'au bord de fuite (17) ;
- un conduit central (34) principalement radial situé entre la paroi d'extrados (21) et le deuxième conduit (42) du circuit médian (28), ce conduit central (34) collectant de l'air au niveau du pied (P) et s'étendant entre au moins deux des trois conduits (41, 42, 43) du circuit médian (28) pour alimenter directement la cavité sous baignoire (36).

2. Aube selon la revendication 1, dans laquelle au moins une partie du premier coude (46) et une extrémité du troisième conduit (43) sont situés entre la cavité sous baignoire (36) et la paroi d'intrados (19).

3. Aube selon la revendication 1, dans laquelle au moins une partie du premier coude (46) est située entre la cavité sous baignoire (36) et la paroi d'intrados (19), et dans laquelle le troisième conduit (43) présente une extrémité qui se termine au niveau de la paroi de sommet (25).

4. Aube selon la revendication 1, dans laquelle le conduit central (34) et la cavité sous baignoire (36) forment un conduit en L situé du côté de la paroi d'extrados (21).

5. Aube selon l'une des revendications 1 à 4, dans laquelle le conduit central (34) s'étend entre au moins deux conduits (41, 43) du circuit médian (28) qui s'étendent l'un et l'autre sur la majorité de leurs longueurs respectives depuis la paroi d'extrados (21) jusqu'à la paroi d'intrados (19).

6. Aube selon la revendication 5, dans laquelle le premier conduit (41) et le troisième conduit (43) s'étendent l'un et l'autre sur la majorité de leurs longueurs depuis la paroi d'intrados (19) jusqu'à la paroi d'extrados (21), et dans laquelle le conduit central (34) s'étend d'une part entre le premier conduit (41) et le troisième conduit (43), et d'autre part entre le deuxième conduit (42) et la paroi d'extrados (21).

7. Aube selon l'une des revendications précédentes, dans laquelle la paroi d'intrados (19) comporte des trous de refroidissement (22) qui la traversent et débouchent dans le troisième conduit (43) pour former un film de refroidissement de la paroi d'intrados (19) en amont du bord de fuite (17).

8. Aube selon l'une des revendications précédentes, dans laquelle la paroi d'intrados est dépourvue de trous débouchant dans le premier conduit (41) et/ou dans le deuxième conduit (42).

9. Aube selon l'une des revendications précédentes, comportant des fentes de refroidissement (24) traversant la paroi d'intrados (19) le long du bord de fuite (17) pour la refroidir, et dans laquelle au moins une de ces fentes (24) est située du côté du sommet (S) et est alimentée en air de refroidissement par la cavité sous baignoire (36).

10. Aube selon l'une des revendications précédentes, comprenant un circuit aval (29) additionnel comportant un conduit aval (51) principalement radial, ce conduit aval (51) collectant de l'air au niveau du pied (P) pour alimenter plusieurs fentes de refroidissement (24) du bord de fuite (17).

11. Aube selon la revendication 10, dans laquelle le conduit aval (51) alimente les fentes (24) par l'intermédiaire d'une rampe aval (52) avec laquelle il communique par des canaux (54) principalement axiaux.

12. Aube selon l'une de revendications précédentes, comprenant au moins un conduit amont (31) principalement radial dédié au refroidissement du bord d'attaque (16), ce conduit amont (31) collectant de l'air de refroidissement au niveau du pied (P) pour refroidir le bord d'attaque (16) en évacuant cet air par des trous (22) traversant la paroi de la pale au niveau du bord d'attaque (16).

13. Turbine de turbomachine comprenant une aube selon l'une quelconque des revendications 1 à 12.

14. Turbomachine comprenant une turbine selon la revendication précédente.

15. Noyau céramique pour la fabrication d'une aube de turbine d'une turbomachine telle qu'un turboréacteur, destinée à être montée autour d'un axe de rotation (AX) sur un disque de rotor tournant autour d'un axe de rotation (AX), comprenant un pied (P) pour son montage dans une alvéole du disque, et une pale (12) creuse s'étendant à partir du pied (P) selon une direction radiale d'envergure (EV) en se terminant par un sommet (S) formant une baignoire (B), la pale (12) comprenant une paroi d'intrados (19) et une paroi d'extrados (21), ainsi qu'un bord d'attaque (16), un bord de fuite (17) et une paroi de sommet (25) délimitant un fond de la baignoire (B), et par lesquels la paroi d'intrados (19) est reliée à la paroi d'extrados (21), ce noyau comprenant :
- un élément de noyau pour former un circuit médian (28) de type en trombone, incluant un premier conduit (41) collectant de l'air au niveau du pied (P) et qui est raccordé par un premier coude (46) à un deuxième conduit (42) qui est raccordé par un deuxième coude (47) à un troisième conduit (43) ces premier deuxième et troisième conduits (41, 42, 47) étant principalement radiaux, les deuxième et troisième conduits (42, 43) étant situés entre le premier conduit (41) et le bord de fuite (17) ;
- un autre élément de noyau pour former une cavité sous baignoire (36) située du côté de la paroi d'extrados (21) et de la paroi de sommet (25) et qui s'étend le long du sommet (S) jusqu'au bord de fuite (17), ainsi qu'un conduit central (34) principalement radial situé entre la paroi d'extrados (21) et le circuit médian (28), ce conduit central (34) collectant de l'air au niveau du pied (P) et s'étendant entre au moins deux des trois conduits (41, 42, 43) du circuit médian (28) et alimente directement la cavité sous baignoire (36).

## Patentansprüche

1. Turbinenschaufel einer Turbomaschine, wie eines Turboluftstrahltriebwerks, die dazu bestimmt ist, entlang einer Drehachse (AX) auf einer Rotorscheibe montiert zu werden, die sich um die Drehachse (AX) dreht, einen Fuß (P) umfassend für ihre Montage in einer Steckhülse der Scheibe, und einen hohlen Flügel (12), der sich vom Fuß (P) entlang einer radialen Umfangsrichtung (EV) erstreckt, mit einem Scheitel (S) endend, der eine Wanne (B) bildet, wobei der Flügel (12) eine Innenwölbungswand (19) und eine Außenwölbungswand (21) umfasst sowie eine Eintrittskante (16), eine Austrittskante (17) und eine Scheitelwand (25), die einen Boden der Wanne (B) abgrenzt, und durch die die Innenwölbungswand (19) mit der Außenwölbungswand (21) vereint ist, **dadurch gekennzeichnet, dass** der Flügel (12) auch umfasst:
- einen mittleren Kreislauf (28), vom Typ Posaune, der einen ersten Kanal (41) einschließt, der Luft im Bereich des Fußes (P) sammelt, und der durch einen ersten Krümmer (46) mit einem zweiten Kanal (42) verbunden ist, der durch einen zweiten Krümmer (47) mit einem dritten Kanal (43) verbunden ist, wobei diese ersten, zweiten und dritten Kanäle (41, 42, 43) grundsätzlich radial sind, wobei der zweite und der dritte Kanal (42, 43) zwischen dem ersten Kanal (41) und der Austrittskante (17) angeordnet sind;
- einen Hohlraum unter der Wanne (36), der auf der Seite der Außenwölbungswand (21) und der Scheitelwand (25) angeordnet ist, und der sich entlang des Scheitels (S) bis zur Austrittskante (17) erstreckt;
- einen grundsätzlich radialen Mittelkanal (34), der zwischen der Außenwölbungswand (21) und dem zweiten Kanal (42) des mittleren Kreislaufes (28) angeordnet ist, wobei dieser Mittelkanal (34) Luft im Bereich des Fußes (P) sammelt und sich zwischen mindestens zwei der drei Kanäle (41, 42, 43) des mittleren Kreislaufes (28) erstreckt, um den Hohlraum unter der Wanne (36) direkt zu versorgen.

2. Schaufel nach Anspruch 1, wobei mindestens ein Teil des ersten Krümmers (46) und ein Ende des dritten Kanals (43) zwischen dem Hohlraum unter der Wanne (36) und der Innenwölbungswand (19) angeordnet sind.

3. Schaufel nach Anspruch 1, wobei mindestens ein Teil des ersten Krümmers (46) zwischen dem Hohlraum unter der Wanne (36) und der Innenwölbungswand (19) angeordnet ist, und wobei der dritte Kanal (43) ein Ende aufweist, das im Bereich der Scheitelwand (25) endet.

4. Schaufel nach Anspruch 1, wobei der Mittelkanal (34) und der Hohlraum unter der Wanne (36) einen L-förmigen Kanal bilden, der auf der Seite der Außenwölbungswand (21) angeordnet ist.

5. Schaufel nach einem der Ansprüche 1 bis 4, wobei sich der Mittelkanal (34) zwischen mindestens zwei Kanälen (41, 43) des mittleren Kreislaufes (28) erstreckt, die sich beide über den größeren Teil ihrer jeweiligen Längen von der Außenwölbungswand (21) bis zur Innenwölbungswand (19) erstrecken.

6. Schaufel nach Anspruch 5, wobei sich der erste Kanal (41) und der dritte Kanal (43) beide über den größeren Teil ihrer Längen von der Innenwölbungswand (19) bis zur Außenwölbungswand (21) erstrecken, und wobei sich der Mittelkanal (34) einerseits zwischen dem ersten Kanal (41) und dem dritten Kanal (43) erstreckt und andererseits zwischen dem zweiten Kanal (42) und der Außenwölbungswand (21).

7. Schaufel nach einem der vorhergehenden Ansprüche, wobei die Innenwölbungswand (19) Kühllöcher (22) beinhaltet, die durch sie hindurchgehen und in den dritten Kanal (43) münden, um einen Kühlfilm der Innenwölbungswand (19) zu bilden, stromaufwärts der Austrittskante (17).

8. Schaufel nach einem der vorhergehenden Ansprüche, wobei die Innenwölbungswand keine Löcher aufweist, die in den ersten Kanal (41) und/oder in den zweiten Kanal (42) münden.

9. Schaufel nach einem der vorhergehenden Ansprüche, Kühlschlitze (24) beinhaltend, die durch die Innenwölbungswand (19) entlang der Austrittskante (17) hindurchgehen, um sie abzukühlen, und wobei mindestens einer dieser Schlitze (24) auf der Seite des Scheitels (S) angeordnet ist und durch den Hohlraum unter der Wanne (36) mit Kühlluft versorgt wird.

10. Schaufel nach einem der vorhergehenden Ansprüche, einen zusätzlichen stromabwärtigen Kreislauf (29) umfassend, der einen grundsätzlich radialen stromabwärtigen Kanal (51) beinhalt, wobei dieser stromabwärtige Kanal (51) Luft im Bereich des Fußes (P) sammelt, um mehrere Kühlschlitze (24) der Austrittskante (17) zu versorgen.

11. Schaufel nach Anspruch 10, wobei der stromabwärtige Kanal (51) die Schlitze (24) über eine stromabwärtige Rampe (52) versorgt, mit der er durch grundsätzlich axiale Kanäle (54) kommuniziert.

12. Schaufel nach einem der vorhergehenden Ansprüche, mindestens einen grundsätzlich radialen stromaufwärtigen Kanal (31) umfassend, der zur Kühlung der Eintrittskante (16) vorgesehen ist, wobei dieser stromaufwärtige Kanal (31) Kühlluft im Bereich des Fußes (P) sammelt, um die Eintrittskante (16) zu kühlen, indem er diese Luft durch Löcher (22) ableitet, die durch die Wand der Flügels im Bereich der Eintrittskante (16) hindurchgehen.

13. Turbine einer Turbomaschine, eine Schaufel nach einem der Ansprüche 1 bis 12 umfassend.

14. Turbomaschine, eine Turbine nach dem vorhergehenden Anspruch umfassend.

15. Keramischer Kern zur Herstellung einer Turbinenschaufel einer Turbomaschine, wie eines Turboluftstrahltriebwerks, die dazu bestimmt ist, entlang einer Drehachse (AX) auf einer Rotorscheibe montiert zu werden, die sich um die Drehachse (AX) dreht, einen Fuß (P) umfassend für ihre Montage in einer Steckhülse der Scheibe, und einen hohlen Flügel (12), der sich vom Fuß (P) entlang einer radialen Umfangsrichtung (EV) erstreckt, mit einem Scheitel (S) endend, der eine Wanne (B) bildet, wobei der Flügel (12) eine Innenwölbungswand (19) und eine Außenwölbungswand (21) umfasst sowie eine Eintrittskante (16), eine Austrittskante (17) und eine Scheitelwand (25), die einen Boden der Wanne (B) abgrenzt, und durch die die Innenwölbungswand (19) mit der Außenwölbungswand (21) vereint ist, wobei dieser Kern umfasst:
- ein Kernelement zum Bilden eines mittleren Kreislaufs (28), vom Typ Posaune, der einen ersten Kanal (41) einschließt, der Luft im Bereich des Fußes (P) sammelt und der durch einen ersten Krümmer (46) mit einem zweiten Kanal (42) verbunden ist, der durch einen zweiten Krümmer (47) mit einem dritten Kanal (43) verbunden ist, wobei diese ersten, zweiten und dritten Kanäle (41, 42, 47) grundsätzlich radial sind, wobei der zweite und der dritte Kanal (42, 43) zwischen dem ersten Kanal (41) und der Austrittskante (17) angeordnet sind;
- ein weiteres Kernelement zum Bilden eines Hohlraums unter der Wanne (36), der auf der Seite der Außenwölbungswand (21) und der Scheitelwand (25) angeordnet ist, und der sich entlang des Scheitels (S) bis zur Austrittskante (17) erstreckt, sowie eines grundsätzlich radialen Mittelkanals (34), der zwischen der Außenwölbungswand (21) und dem mittleren Kreislauf (28) angeordnet ist, wobei dieser Mittelkanal (34) Luft im Bereich des Fußes (P) sammelt und sich zwischen mindestens zwei der drei Kanäle (41, 42, 43) des mittleren Kreislaufes (28) erstreckt, um den Hohlraum unter der Wanne (36) direkt zu versorgen.

## Claims

1. A turbine blade of a turbomachine such as a turbojet, intended to be mounted around an axis of rotation (AX) on a rotor disc rotating around the axis of rotation (AX), comprising a root (P) for mounting it in a cell of the disc, and a hollow vane (12) extending from the root (P) in a radial spanwise direction (EV) ending in a tip (S) forming a squealer (B), the vane (12) comprising a lower surface wall (19) and an upper surface wall (21), as well as a leading edge (16), a trailing edge (17) and a tip wall (25) delimiting a bottom of the squealer (B), and by which the lower surface wall (19) is connected to the upper surface wall (21), this vane (12) also comprising:
- a middle circuit (28) of the trombone type, including a first duct (41) collecting air at the root (P) and which is connected by a first elbow (46) to a second duct (42) which is connected by a second elbow (47) to a third duct (43), these first, second and third ducts (41, 42, 43) being mainly radial, the second and third ducts (42, 43) being located between the first duct (41) and the trailing edge (17);
- a cavity under the squealer (36) located on the side of the upper surface wall (21) and the tip wall (25) and which extends along the tip (S) to the trailing edge (17);
- a mainly radial central duct (34) located between the upper surface wall (21) and the second duct (42) of the middle circuit (28), this central duct (34) collecting air at the root (P) and extending between at least two of the three ducts (41, 42, 43) of the middle circuit (28) to directly supply the cavity under the squealer (36).

2. The blade according to claim 1, wherein at least part of the first elbow (46) and one end of the third duct (43) are located between the cavity under the squealer (36) and the lower surface wall (19).

3. Blade according to claim 1, wherein at least part of the first elbow (46) is located between the cavity under the squealer (36) and the lower surface wall (19), and wherein the third duct (43) has an end which ends at the tip wall (25).

4. A blade according to claim 1, wherein the central duct (34) and the cavity under the squealer (36) form an L-shaped duct located on the side of the upper surface wall (21).

5. The blade according to claim 1, wherein the central duct (34) extends between at least two ducts (41, 43) of the middle circuit (28) which both extend over the majority of their respective lengths from the upper surface wall (21) to the lower surface wall (19).

6. The blade according to claim 5, wherein the first duct (41) and the third duct (43) both extend over the majority of their lengths from the lower surface wall (19) to the upper surface wall (21), and wherein the central duct (34) extends on the one hand between the first duct (41) and the third duct (43), and on the other hand between the second duct (42) and the upper surface wall (21).

7. The blade according to claim 1, wherein the lower surface wall (19) includes cooling holes (22) which pass therethrough and open into the third duct (43) to form a film for cooling the lower surface wall (19) upstream of the trailing edge (17).

8. The blade according to claim 1, wherein the lower surface wall is devoid of holes opening into the first duct (41) and/or into the second duct (42).

9. The blade according to claim 1, including cooling slots (24) passing through the lower surface wall (19) along the trailing edge (17) in order to cool it, and wherein at least one of these slots (24) is located on the side of the tip (S) and is supplied with cooling air by the cavity under the squealer (36).

10. The blade according to claim 1, comprising an additional downstream circuit (29) including a mainly radial downstream duct (51), this downstream duct (51) collecting air at the root (P) to supply several slots (24) for cooling the trailing edge (17).

11. The blade according to claim 10, wherein the downstream duct (51) supplies the slots (24) via a downstream ramp (52) with which it communicates by mainly axial channels (54).

12. The blade according to claim 1, comprising at least one mainly radial upstream duct (31) dedicated to cooling the leading edge (16), this upstream duct (31) collecting cooling air at the root (P) to cool the leading edge (16) by discharging this air through holes (22) passing through the wall of the vane at the leading edge (16).

13. A turbomachine turbine comprising a blade according to claim 1.

14. The turbomachine comprising a turbine according to the preceding claim.

15. A ceramic core for the manufacture of a turbine blade of a turbomachine such as a turbojet, intended to be mounted around an axis of rotation (AX) on a rotor disc rotating around an axis of rotation (AX), comprising a root (P) for mounting it in a cell of the disc, and a hollow vane (12) extending from the root (P) in a radial spanwise direction (EV) ending in a tip (S) forming a squealer (B), the vane (12) comprising a lower surface wall (19) and an upper surface wall (21), as well as a leading edge (16), a trailing edge (17) and a tip wall (25) delimiting a bottom of the squealer (B), and by which the lower surface wall (19) is connected to the upper surface wall (21), this core comprising:
- a core element to form a middle circuit (28) of the trombone type, including a first duct (41) collecting air at the root (P) and which is connected by a first elbow (46) to a second duct (42) which is connected by a second elbow (47) to a third duct (43) these first second and third ducts (41, 42, 47) being mainly radial, the second and third ducts (42, 43) being located between the first duct (41) and the trailing edge (17);
- another core element to form a cavity under the squealer (36) located on the side of the upper surface wall (21) and the tip wall (25) and which extends along the tip (S) to the trailing edge (17), as well as a mainly radial central duct (34) located between the upper surface wall (21) and the middle circuit (28), this central duct (34) collecting air at the root (P) and extending between at least two of the three ducts (41, 42, 43) of the middle circuit (28) and directly supplies the cavity under the squealer (36).
